# EUROPEAN PATENT APPLICATION

(11) **EP 4 641 726 A1**
(43) Date of publication of application: **29.10.2025**
(21) Application number: 25165965.2
(22) Date of filing: 25.03.2025
(51) Int. Cl.: H01M 10/05, H01M 50/103, H01M 50/176, H01M 50/474, H01M 50/477, H01M 50/548, H01M 10/04, H01M 50/184

(54) **NONAQUEOUS ELECTROLYTIC SOLUTION SECONDARY BATTERY**

(30) Priority: 25.04.2024 JP 2024071787
(71) Applicant: Prime Planet Energy & Solutions, Inc., Chuo-ku, Tokyo 103-0022 (JP)
(72) Inventor: YONEYAMA, Akihiro, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

A herein disclosed secondary battery 1 includes a case main body 10, a second sealing plate 20B, and an electrode body 30. Then, a second spacer 40B supporting the electrode body 30 from a downward position at an injection time of an electrolytic solution is arranged between the second sealing plate 20B and the electrode body 30. The second spacer 40B includes a pair of first wall parts 41 and a pair of second wall parts 42. Then, the second spacer 40B is configured to make a load bearing capacity of the second wall part 42 be lower than a load bearing capacity of the first wall part 41. Then, this second spacer 40B includes a rib configured to bridge the pair of second wall parts 42. By doing this, it is possible to suppress the deformation of the second spacer 40B.

## Description

### BACKGROUND

### 1. Technical Field

A technique disclosed herein relates to a nonaqueous electrolytic solution secondary battery.

### 2. Description of the Related Art

The nonaqueous electrolytic solution secondary battery (below, simply referred to as "secondary battery", too) includes, for example, an electrode body, an electrolytic solution, and a battery case configured to accommodate the electrode body and the electrolytic solution. On this battery case, an opening (a liquid injection hole) is formed for injecting the electrolytic solution into it. Additionally, in this kind of secondary battery, a spacer might be arranged between the battery case and the electrode body. By doing this, a movement of the electrode body inside the battery case is restricted, and thus it is possible to suppress a damage on the electrode body during a transit of the battery. An example of the secondary battery including this spacer is disclosed by JP2023-502461.

### SUMMARY

Anyway, in a manufacture of the secondary battery, a liquid injection hole is arranged at an upward position in a gravity direction and then a liquid injection step for injecting the electrolytic solution from this liquid injection hole is performed. Depending on a structure of the secondary battery, the spacer might be arranged at a downward position of the electrode body for this liquid injection step. In this situation, there is a fear that the spacer is deformed by a weight of the electrode body. A herein disclosed technique has been made in order to solve this issue, and has an object to suppress the deformation of the spacer at the liquid injection step.

A herein disclosed nonaqueous electrolytic solution secondary battery includes: a case main body having a square cylindrical shape with a pair of openings at both ends; a pair of sealing plates covering the pair of openings so as to construct a battery case; an electrode body accommodated at an inside of the battery case; and an electrolytic solution accommodated at the inside of the battery case. This case main body includes: a pair of first side surfaces having a rectangular plate shape opposed mutually; and a pair of second side surfaces having a rectangular plate shape opposed mutually, and respectively extending from an edge of one of the first side surfaces to an edge of the other one of the first side surfaces. Ihe pair of sealing plates includes: a first sealing plate comprising a liquid injection hole for injecting the electrolytic solution to the inside of the battery case; and a second sealing plate arranged at a downward position in a gravity direction at an injection time of the electrolytic solution. A spacer supporting the electrode body from the downward position at the injection time of the electrolytic solution is arranged in a space between the second sealing plate and the electrode body. The spacer includes: pair of first wall parts respectively extending along at least a part of the pair of first side surfaces of the case main body; a pair of second wall parts respectively extending along at least a part of the pair of second side surfaces of the case main body; and a partition part being a plate-shaped member extending along an opposed direction of the pair of first side surfaces, and arranged between the electrode body and the sealing plate, and supported by the first wall parts and the second wall parts. The spacer is configured to make a load bearing capacity of the second wall part be lower than a load bearing capacity of the first wall part, and comprises a rib configured to bridge the pair of second wall parts.

The second spacer of the herein disclosed secondary battery is a box-shaped spacer that includes the pair of first wall parts, and the pair of second wall parts. Then, the second wall part of the second spacer is configured to have the load bearing capacity lower than the first wall part. By doing this, it is possible to control a deformation pattern of the second spacer when a weight of the electrode body is added, so as to cause the deformation in which a second wall part works as a starting point. Then, the second spacer of the herein disclosed secondary battery includes the rib configured to bridge the pair of second wall parts. By doing this, it is possible to reinforce the second wall part becoming the starting point of the deformation, and thus it is possible to suppress the deformation of the second spacer at the liquid injection step.

### BRIEF DESCRIPTION OF THE DRAWINGS

FIG. 1 is a perspective view that schematically shows a secondary battery in accordance with one embodiment.
FIG. 2 is a perspective view in which the secondary battery in accordance with one embodiment is viewed from a view point different from FIG. 1.
FIG. 3 is a cross section view that schematically shows a secondary battery at a liquid injection step.
FIG. 4 is an enlarged cross section view that schematically shows a vicinity of a second spacer of FIG. 3.
FIG. 5 is a perspective view that schematically shows an electrode body of the secondary battery in accordance with one embodiment.
FIG. 6 is a perspective view that schematically shows a second spacer of the secondary battery in accordance with one embodiment.
FIG. 7 is an enlarged cross section view that schematically shows the vicinity of the second spacer at the liquid injection step of the secondary battery in accordance with another embodiment.

### DETAILED DESCRIPTION

Below, some embodiments of the herein disclosed technique will be described in detail by reference to the accompanying drawings. Incidentally, the matters other than matters particularly mentioned in this specification, and required for practicing a herein disclosed technique (for example, a general configuration and a manufacture process of a secondary battery) can be grasped as design matters of those skilled in the art based on the related art in the present field. The herein disclosed technique can be executed based on the contents disclosed in the present specification, and the technical common sense in the present field. Additionally, in the following accompanying drawings, the members/parts providing the same effect are provided with the same numerals and signs and are explained.

### <First embodiment>

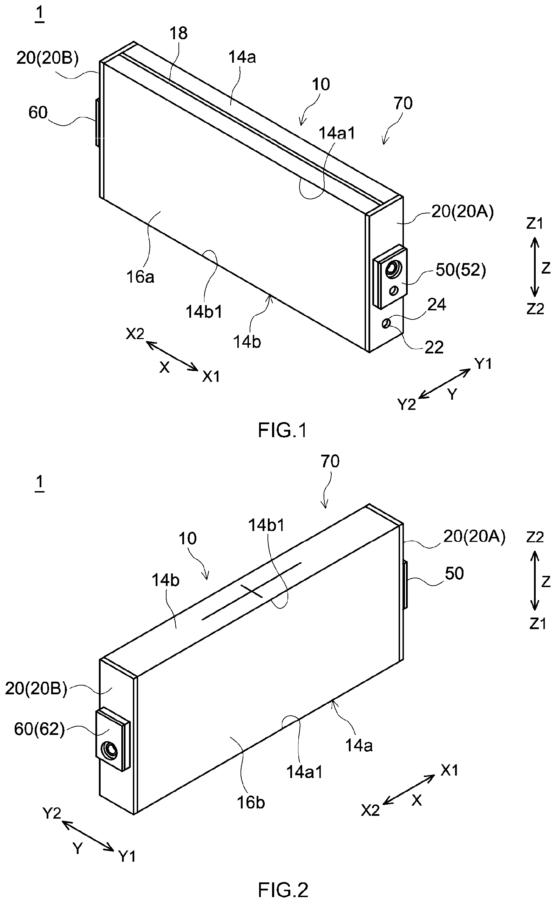

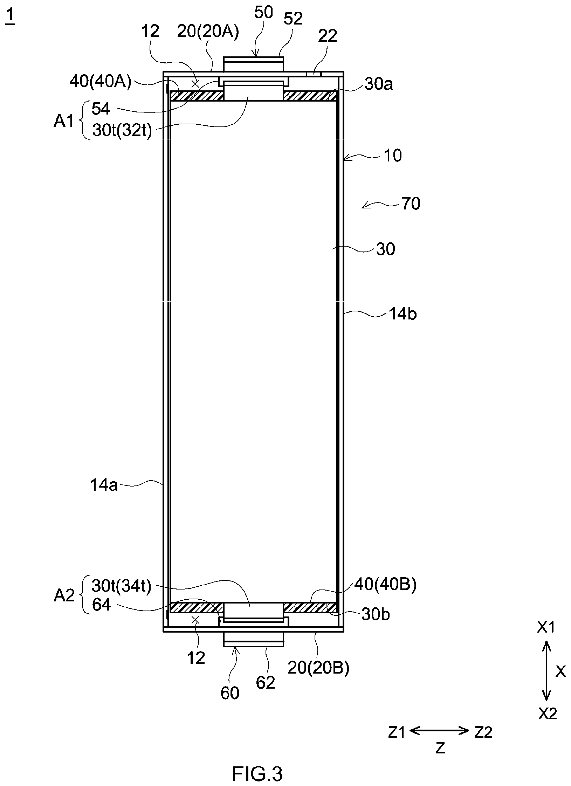

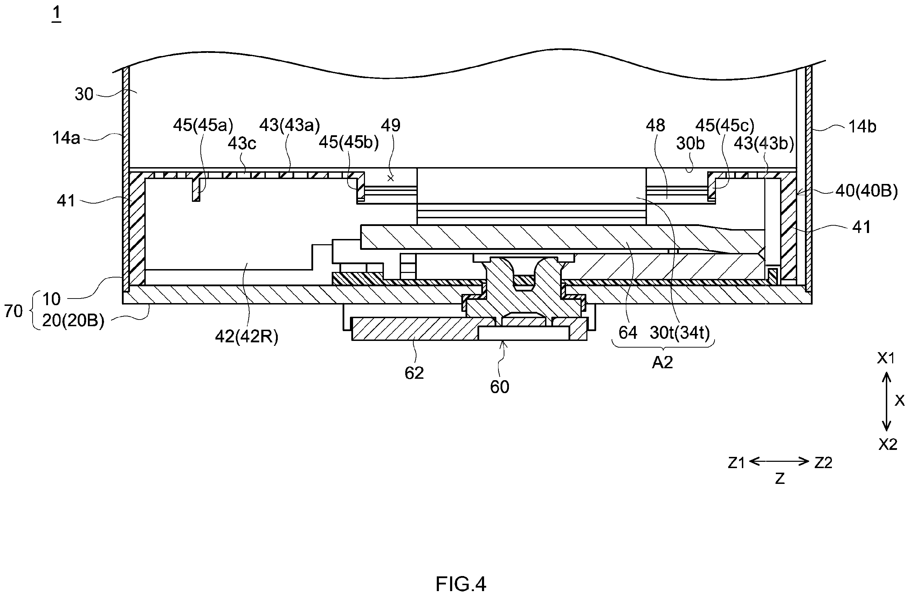

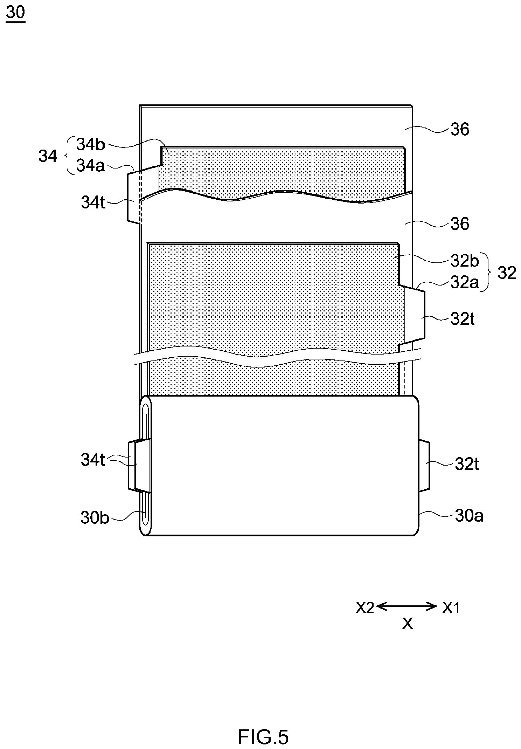

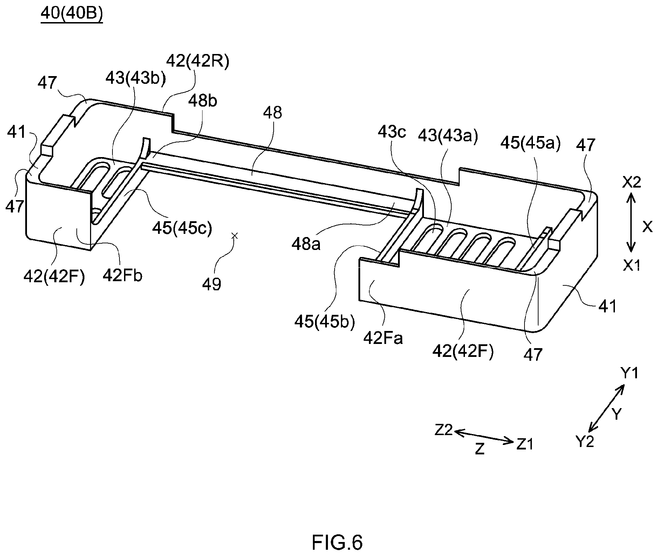

Below, one embodiment of a herein disclosed nonaqueous electrolytic solution secondary battery will be described. FIG. 1 is a perspective view that schematically shows the secondary battery in accordance with the present embodiment. FIG. 2 is a perspective view in which the secondary battery in accordance with the present embodiment is viewed from a view point different from FIG. 1. FIG. 3 is a cross section view that schematically shows the secondary battery at a liquid injection step. FIG. 4 is an enlarged cross section view that schematically shows a vicinity of a second spacer of FIG. 3. FIG. 5 is a perspective view that schematically shows an electrode body of the secondary battery in accordance with the present embodiment. FIG. 6 is a perspective view that schematically shows the second spacer of the secondary battery in accordance with the present embodiment. Incidentally, in the present specification, reference signs X, Y, and Z of drawings are respectively referred to as a first direction, a second direction, and a third direction.

As shown in FIG. 1 to FIG. 4, the secondary battery 1 in accordance with the present embodiment includes a case main body 10, a sealing plate 20, an electrode body 30, an electrolytic solution (illustrations are omitted), and a spacer 40. Below, each of configurations will be described.

### (1) Case main body

The case main body 10 is a square cylindrical member that includes a pair of opening parts 12 at both ends in the first direction X (see FIG. 3). This case main body 10 includes a pair of first side surfaces 14a, 14b and a pair of second side surfaces 16a, 16b. The first side surfaces 14a, 14b are a pair of plate-shaped portions that are configured to be opposed mutually in the third direction Z. Then, each of the first side surfaces 14a, 14b is configured to extend along the first direction X. Incidentally, in the present specification, a direction in which the pair of first side surfaces 14a, 14b are opposed (in other words, the third direction Z in drawings) is referred to as "opposed direction of the first side surfaces". On the other hand, as shown in FIG. 1 and FIG. 2, each of the second side surfaces 16a, 16b is a rectangular plate-shaped portion that is configured to extend from a border 14a1 of one first side surface 14a to a border 14b1 of the other first side surface 14b. Then, the second side surfaces 16a, 16b are configured to be opposed mutually in the second direction Y Incidentally, in the present specification, a direction in which the pair of second side surfaces 16a, 16b are opposed to each other (in other words, the second direction Y in drawings) is referred to as "opposed direction of the second side surfaces". The second side surfaces 16a, 16b are also configured to extend along the first direction X. In addition, as shown by FIG. 1 and FIG. 2, the case main body 10 of the present embodiment is a rectangular parallelepiped member. Then, the first side surfaces 14a, 14b configure narrow width surfaces of the case main body 10. In addition, the second side surfaces 16a, 16b configure wide width surfaces of the case main body 10. In other words, a dimension of the second side surfaces 16a, 16b in the third direction Z is longer than a dimension of the first side surfaces 14a, 14b in the second direction Y.

Incidentally, this case main body 10 can be manufactured by folding and bending one metal plate so as to make it be formed in a cylindrical shape, and then by joining (for example, welding and joining) a seam. Thus, regarding the case main body 10 shown by FIG. 1, a welded and joined part 18 configured to extend along the first direction X is formed on the first side surface 14a at one Z1 in the third direction Z. Incidentally, it is suitable that a material of the case main body 10 is a metal material, such as aluminum, aluminum alloy, iron, and iron alloy.

### (2) Sealing plate

The sealing plate 20 is a pair of plate-shaped members configured to cover a pair of opening parts 12 of the case main body 10. The sealing plate 20 in the present embodiment is a rectangular plate-shaped member whose dimension in the second direction Y is longer than a dimension in the third direction Z. The opening parts 12 of the case main body 10 are sealed by this sealing plate 20 so as to construct a battery case 70. Incidentally, it is suitable that a material of each sealing plate 20 is a metal material (aluminum, aluminum alloy, iron, iron alloy, or the like) which is the same kind as the case main body 10.

As shown in FIG. 1 and FIG. 2, the pair of sealing plates 20 are opposed mutually in the first direction X. In an explanation described blow, the sealing plate 20 at one X1 in the first direction X is referred to as a first sealing plate 20A and the sealing plate 20 at the other X2 in the first direction X is referred to as a second sealing plate 20B. The first sealing plate 20A includes a liquid injection hole 22 through which the electrolytic solution is injected into the battery case 70. The liquid injection hole 22 is an opening part that is configured to penetrate the first sealing plate 20A. In the manufacture of the secondary battery 1, the electrolytic solution is injected to an inside of the battery case 70 through this liquid injection hole 22. Then, the liquid injection hole 22 is sealed by the sealing plug 24, after the liquid injection of the electrolytic solution is performed. Incidentally, as shown by FIG. 3, in the present embodiment, the injection of the electrolytic solution is performed in a state where the secondary battery 1 is disposed to make the first sealing plate 20A including the liquid injection hole 22 be arranged at an upward position in a gravity direction. In other words, when the liquid injection step is performed, the second sealing plate 20B is arranged at a downward position in the gravity direction.

As shown in FIG. 1 and FIG. 2, the positive electrode terminal 50 is attached to the first sealing plate 20A. As described above, the positive electrode terminal 50 is provided at a central part in the opposed direction (the third direction Z) of 12a,12b of the first side surface of the case main body 10. In order to avoid an interference with this positive electrode terminal 50, regarding the secondary battery of the present embodiment, the liquid injection hole 22 is formed at one (the other one Z2 in the third direction Z) of end parts of the first sealing plate 20A in the opposed direction. In addition, the positive electrode terminal 50 includes a positive electrode outside terminal 52 and a positive electrode inside terminal 54. As shown in FIG. 3, the positive electrode outside terminal 52 is configured to penetrate the first sealing plate 20A so as to be exposed to an outside of the battery case 70. The positive electrode inside terminal 54 is accommodated at the inside of the battery case 70. This positive electrode inside terminal 54 is connected to an electrode tab 30t (a positive electrode tab 32t) of the electrode body 30. Incidentally, in the present specification, parts configured to form an electrically conductive pathway from the electrode body 30 inside the battery case 70 to an outside terminal (a positive electrode outside terminal 52) outside the battery case 70 are all together referred to as "inside electrically conductive member". Regarding the secondary battery 1 in accordance with the present embodiment, an inside electrically conductive member A1 at the positive electrode side is configured with the positive electrode inside terminal 54 and the positive electrode tab 32t.

On the other hand, a negative electrode terminal 60 is attached to the second sealing plate 20B. As shown in FIG. 3, the negative electrode terminal 60 is also provided at the central part in the third direction Z. In addition, the negative electrode terminal 60 includes a negative electrode outside terminal 62 and a negative electrode inside terminal 64. The negative electrode outside terminal 62 is configured to penetrate the second sealing plate 20B so as to be exposed to the outside of the battery case 70. In addition, the negative electrode inside terminal 64 is accommodated at the inside of the battery case 70. This negative electrode inside terminal 64 is connected to a negative electrode tab 34t of the electrode body 30. Thus, an inside electrically conductive member A2 at the negative electrode side consists of the negative electrode inside terminal 64 and the negative electrode tab 34t.

### (3) Electrode body

The electrode body 30 is a power generating element of the secondary battery 1. As shown in FIG. 3, the electrode body 30 is accommodated at the inside of the battery case 70. In particular, the electrode body 30 is arranged at the central part in the first direction X to position between the pair of sealing plates 20. In addition, as shown in FIG. 5, the electrode body 30 includes a positive electrode 32 formed in a sheet shape, a negative electrode 34 formed in a sheet shape, and a separator 36. This positive electrode 32 includes a positive electrode substrate 32a that is an electrically conductive metal foil, and includes a positive electrode active material layer 32b that is imparted on a surface of the positive electrode substrate 32a. In addition, on a side edge part at one X1 in the first direction X of the positive electrode 32, the positive electrode tab 32t in which the positive electrode substrate 32a is exposed is provided. On the other hand, the negative electrode 34 is an electrode that is opposed to the positive electrode 32. This negative electrode 34 includes a negative electrode substrate 34a that is an electrically conductive metal foil, and includes a negative electrode active material layer 34b that is imparted on a surface of the negative electrode substrate 34a. In addition, on a side edge part at the other X2 in the first direction X of the negative electrode 34, the negative electrode tab 34t in which the negative electrode substrate 34a is exposed is provided. In addition, the separator 36 is a sheet having an insulating property and being disposed between the positive electrode 32 and the negative electrode 34. Incidentally, as a material used for each member of the electrode body 30, it is possible without particular restriction to use a conventionally known material that can be used for a general secondary battery.

Incidentally, the electrode body 30 in accordance with the present embodiment is a wound electrode body. This wound electrode body 30 is formed by winding a laminate body in which the positive electrode 32, the negative electrode 34, and the separator 36 are laminated. On both side surfaces in the first direction X of this wound electrode body 30, osmosis areas 30a, 30b are formed in which an electrode gap between the positive electrode 32 and the negative electrode 34 (the inside of the electrode body 30) is exposed to the outside. In particular, a first osmosis area 30a is formed on a side surface at one X1 in the first direction X of the electrode body 30. In addition, a second osmosis area 30b is formed on a side surface at the other X2 in the first direction X of the electrode body 30. The electrolytic solution injected into the battery case 70 osmoses to the inside of the electrode body 30 through these osmosis areas 30a, 30b. Then, as shown in FIG. 3, the electrode body 30 of the present embodiment is accommodated at the inside of the battery case 70 so as to make the first osmosis area 30a and the liquid injection hole 22 be opposed to each other. By doing this, it becomes easy to make the electrolytic solution injected from the liquid injection hole 22 osmose to the inside of the electrode body 30.

### (4) Electrolytic solution

As the illustration is omitted, the electrolytic solution is accommodated at the inside of the battery case 70. As a component of the electrolytic solution, it is possible without particular restriction to use one capable of being used for the general secondary battery. As described above, the electrolytic solution osmoses to the inside of the electrode body 30 through the osmosis areas 30a, 30b of the wound electrode body 30. Incidentally, a part of the electrolytic solution might be present at the outside of the electrode body (between the electrode body 30 and the battery case 70) as an excess electrolytic solution. By doing this, it is possible to replenish the electrolytic solution to the inside of the electrode body 30 when the electrolytic solution is short at the inside of the electrode body 30 because of a decomposition of the electrolytic solution.

### (5) Spacer

As shown by FIG. 3, in the secondary battery 1 according to the present embodiment, the spacer 40 is arranged in a space between the sealing plate 20 and the electrode body 30. In particular, the first spacer 40A is arranged between the first sealing plate 20A and the electrode body 30. In addition, a second spacer 40B is arranged between the second sealing plate 20B and the electrode body 30. By these spacers 40, it is possible to inhibit an electrical continuity between the electrode body 30 and the sealing plate 20. In addition, the spacer 40 is configured to restrict a movement of the electrode body 30 in the first direction X. By doing this, it is possible to inhibit a breakage of the electrode body 30 (for example, the electrode tab 30t). Incidentally, as a material of the spacer 40, it is possible without particular restriction to use an insulating property resin (a polyamide resin, or the like) capable of being used for the general secondary battery.

As described above, at the liquid injection step in the present embodiment, the secondary battery 1 is disposed to make the first sealing plate 20A including the liquid injection hole 22 be arranged at the upward position in the gravity direction (see FIG. 3). Thus, the second spacer 40B at the liquid injection of the electrolytic solution is arranged at the downward position in the gravity direction so as to support the electrode body 30 from the downward position. On the other hand, the second spacer 40B is configured to be able to suppress the deformation even if a weight of the electrode body 30 is added at the liquid injection step. This second spacer 40B includes a pair of first wall parts 41, a pair of second wall parts 42, a partition part 43, and a rib 45. Below, a particular structure of the second spacer 40B will be described.

As shown in FIG. 4, the first wall parts 41 are portions being respectively along at least parts of the pair of first side surfaces 14a, 14b of the case main body 10. In particular, the first wall parts 41 are formed at the both end parts of the second spacer 40B in the third direction Z. The first wall parts 41 are erectly provided toward the other one X2 in the first direction X so as to be respectively along parts (end parts at the other one X2 side) of the first side surfaces 14a, 14b in the first direction X. In addition, the first wall parts 41 are configured to extend continuously so as to be respectively along the whole areas of the first side surfaces 14a, 14b in the second direction Y shown by FIG. 1.

Then, the second wall parts 42 are portions being respectively along at least parts of the pair of second side surfaces 16a, 16b of the case main body 10. These second wall parts 42 are along the second side surfaces 16a, 16b being wide width surfaces of the case main body 10. Thus, a length of the second wall part 42 in the third direction Z is longer than a length of the first wall part 41 in the second direction Y. In addition, as shown by FIG. 6, the second wall parts 42 are formed at the both end parts in the second direction Y of the second spacer 40B. For convenience sake of explanation, below, the second wall part 42 formed at the one Y1 side in the second direction Y is referred to as "rear second wall part 42R", and the second wall part 42 formed at the other Y2 side is referred to as "front second wall part 42F". The rear second wall part 42R is configured to extend continuously along the third direction Z. On the other hand, a pass through space 49 for making the inside electrically conductive member A2, at a negative electrode side, pass through is formed on the second spacer 40B in accordance with the present embodiment (see FIG. 4). Thus, the front second wall part 42F as shown in FIG. 6 has an area containing the central part in the third direction Z, and the area is interrupted. Then, the second wall parts 42 are erectly provided toward the other one X2 in the first direction X so as to be respectively along parts (end parts at the other one X2 side) of the second side surfaces 16a, 16b of the case main body 10 in the first direction X.

As shown in FIG. 4, the partition part 43 is a plate-shaped member that is configured to extend along the opposed direction (the third direction Z) of the pair of first side surfaces 14a, 14b so as to be disposed between the electrode body 30 and the sealing plate 20. This partition part 43 is supported by the first wall parts 41 and the second wall parts 42. As shown in FIG. 6, both ends of the partition part 43 in the third direction Z are connected to lower ends of the first wall parts 41. In addition, both ends of the partition part 43 in the second direction Y are connected to lower ends of the second wall parts 42. In addition, as described above, the pass through space 49 is formed in this second spacer 40B. Thus, the partition part 43 is divided at an area containing the central part in the third direction Z. In an explanation described below, the partition part 43 at one Z1 in the third direction Z is referred to as "first partition part 43a", and the partition part 43 at the other one Z2 is referred to as "second partition part 43b". Then, this first partition part 43a and this second partition part 43b are bridged by the second wall part 42 at one Y1 side in the second direction Y and the connecting part 48. In addition, the second spacer 40B according to the present embodiment includes plural openings 43c that are configured to penetrate the partition part 43. This opening 43c is formed on both of the first partition part 43a and the second partition part 43b. By forming the opening 43c on the second spacer 40B arranged at the downward position in the gravity direction when the liquid injection is performed, it is possible to flow a part of the electrolytic solution during the liquid injection to the downward position (the other X2 side in the first direction X) more than the second spacer 40B. By doing this, it is possible to inhibit the electrolytic solution from flowing out through the liquid injection hole 22 when a speed of the osmosis to the electrode body 30 cannot catch up a liquid injection speed of the electrolytic solution.

Here, the second spacer 40B in the present embodiment is configured to make a load bearing capacity of the second wall part 42 become lower than a load bearing capacity of the first wall part 41. By doing this, to cause the deformation in which the second wall part 42 works as a starting point, a deformation pattern of the second spacer 40B in a situation where a weight of the electrode body 30 is added can be controlled. Then, the second spacer 40B in the present embodiment includes a rib 45 that is configured to bridge the pair of second wall parts 42. By doing this, it is possible to reinforce the second wall part 42 becoming the starting point of the deformation, and therefore it is possible to suppress the deformation of the second spacer 40B at the liquid injection step. Below, a point described above will be explained particularly.

### (a) Reduction of load bearing capacity of second wall part

At first, the second spacer 40B in the present embodiment includes features based on 3 structures described below. By doing this, the second wall part 42 of the second spacer 40B becomes to have the load bearing capacity lower than the first wall part 41.

### (a-1) Thickness of wall part

At first, a thickness of the second wall part 42 in the present embodiment is thinner than a thickness of the first wall part 41. By doing this, the load bearing capacity of the second wall part 42 is relatively reduced, and thus it becomes easy to cause the deformation in which the second wall part 42 works as the starting point. Incidentally, the wording "thickness of the second wall part 42" herein represents a dimension of the second wall part 42 in the second direction Y of FIG. 6. In addition, the wording "thickness of the first wall part 41" represents a dimension of the first wall part 41 in the third direction Z. For example, it is good that the thickness of the second wall part 42 is equal to or less than 80% (further suitably equal to or less than 75%, furthermore suitably equal to or less than 60%, or in particular suitably equal to or less than 40%) of the thickness of the first wall part 41. By doing this, it becomes easier to cause the deformation in which the second wall part 42 works as the starting point.

Incidentally, it is good for the second wall part 42 to be relatively thinner than the first wall part 41. In other words, a specific thickness of the second wall part 42 is not particularly restricted. However, the thickness of the second wall part 42 is preferably equal to or less than 1.9 mm, further preferably equal to or less than 1.5 mm, furthermore preferably equal to or less than 1.3 mm, or preferably in particular equal to or less than 0.9 mm. As the thickness of the second wall part 42 becomes thinner, it becomes easier to make the second wall part 42 be the starting point of the deformation. On the other hand, the thickness of the second wall part 42 is preferably equal to or more than 0.4 mm, further preferably equal to or more than 0.5 mm, furthermore preferably equal to or more than 0.6 mm, or preferably in particular equal to or more than 0.7 mm. By doing this, it is possible to inhibit that the second wall part 42 is made to become too much easily deformed. On the other hand, the thickness of the first wall part 41 is preferably equal to or more than 0.5 mm, further preferably equal to or more than 0.6 mm, furthermore preferably equal to or more than 0.7 mm, or preferably in particular equal to or more than 0.8 mm. By doing this, it is possible to suppress the first wall part 41 from becoming the starting point of the deformation. On the other hand, an upper limit of the thickness of the first wall part 41 is preferably equal to or less than 2.0 mm, further preferably equal to or less than 1.6 mm, furthermore preferably equal to or less than 1.4 mm, or preferably in particular equal to or less than 1.0 mm. By doing this, it is possible to suppress a reduction of a liquid retaining amount inside the battery case 70 caused by a volume increase of the second spacer 40B.

### (a-2) Length of wall part

At second, a length of the second wall part 42 in the present embodiment is longer than a length of the first wall part 41. Here, the wording "length of the second wall part 42" herein represents a dimension of the second wall part 42 in the third direction Z of FIG. 6. In addition, a wording "length of the first wall part 41" is a dimension of the first wall part 41 in the second direction Y. In the second spacer 40B shown by FIG. 6, at a corner part 47, the first wall part 41 and the second wall part 42 are mutually supported. In this situation, it becomes easy that the load bearing capacity at a position farthest from the corner part 47 is reduced. Thus, by making the second wall part 42 be longer than the first wall part 41, it is possible to reduce the load bearing capacity of the central part of the second wall part 42. As the result, when a weight of the electrode body 30 is added onto the second spacer 40B, it becomes easy to cause the deformation in which the second wall part 42 works as the starting point. Incidentally, it is good that the length of the second wall part 42 is made to be equal to or more than 150% (further suitably equal to or more than 200%, furthermore suitably equal to or more than 250%, or suitably in particular equal to or more than 300%) of the length of the first wall part 41. By doing this, it becomes easier to cause the deformation in which the second wall part 42 works as the starting point.

Incidentally, it is good for the second wall part 42 if the length of the second wall part is relatively longer than the first wall part 41. In other words, a specific length of the second wall part 42 is not particularly restricted. However, the length of the second wall part 42 is preferably equal to or more than 40 mm, further preferably equal to or more than 50 mm, furthermore preferably equal to or more than 70 mm, or preferably in particular equal to or more than 80 mm. As the second wall part 42 becomes longer, it becomes easier to cause the deformation in which the second wall part 42 works as the starting point. On the other hand, the length of the second wall part 42 is preferably equal to or less than 120 mm, further preferably equal to or less than 110 mm, furthermore preferably equal to or less than 100 mm, or preferably in particular equal to or less than 90 mm. By doing this, it is possible to inhibit the second wall part 42 from becoming too much easily deformed. In addition, the length of the first wall part 41 is preferably equal to or less than 40 mm, further preferably equal to or less than 35 mm, furthermore preferably equal to or less than 30 mm, or preferably in particular equal to or less than 25 mm. By doing this, it is possible to suppress the first wall part 41 from working as the starting point of the deformation. On the other hand, a lower limit of the length of the first wall part 41, which is not particularly restricted, might be equal to or more than 10 mm, might be equal to or more than 12 mm, might be equal to or more than 15 mm, or might be equal to or more than 20 mm.

### (a-3) Division of second wall part

Next, the secondary battery 1 in accordance with the present embodiment includes the inside electrically conductive member A2 (the negative electrode inside terminal 64 and the electrode tab 30t) that is configured to form an electrically conductive pathway reaching from the electrode body 30 inside the battery case 70 to the outside terminal (the negative electrode outside terminal 62) outside the battery case 70 (see FIG. 4). At that time, on the second spacer 40B, a pass through space 49 into which the inside electrically conductive member A2 passes through is formed. By doing this, eve if the second spacer 40B is disposed between the second sealing plate 20B and the electrode body 30, it becomes easy to form the electrically conductive pathway reaching from the electrode body 30 to the negative electrode outside terminal 62. Here, the pass through space 49 of the second spacer 40B shown by FIG. 6 is a notch configured to divide one of the pair of second wall parts 42 (the front second wall part 42F). Then, regarding the front second wall part 42F divided by the pass through space 49, end parts 42Fa, 42Fb disposed adjacent to the pass through space 49 become not supported by the first wall part 41. By doing this, regarding the front second wall part 42F, the load bearing capacities of the end parts 42Fa, 42Fb disposed adjacent to the pass through space 49 can be reduced drastically. Thus, when the weight of electrode body 30 is added to the second spacer 40B, it becomes easy to cause the deformation in which the front second wall part 42F works as the starting point.

### (b) Rib

As described above, the second spacer 40B in the present embodiment is configured to make the load bearing capacity of the second wall part 42 be lower than the load bearing capacity of the first wall part 41. Here, the second wall part 42 is accommodated at the inside of the battery case 70 to be along the second side surfaces 16a, 16b of the case main body 10. Thus, when the weight of the electrode body 30 is added to the second spacer 40B, the second wall part 42 is deformed to be folded and bent toward an inward position of the second direction Y. With respect to this, the second spacer 40B in the present embodiment is provided with the rib 45 that is configured to bridge the pair of second wall parts 42 being opposed to each other. This rib 45 is a plate-shaped member that is configured to extend from the rear second wall part 42R toward the front second wall part 42F. By this rib 45, it is possible to restrict the deformation of the second wall part 42 directed to the inward position of the second direction Y. As described above, the second spacer 40B in the present embodiment controls the deformation pattern of the second spacer 40B to cause the deformation in which the second wall part 42 works as the starting point. Then, the second wall part 42 becoming the starting point of the deformation is reinforced by the rib 45. By doing this, it is possible to suppress the deformation of the second spacer 40B at the liquid injection step.

Incidentally, a thickness of the rib 45 is preferably equal to or more than 0.6 mm, further preferably equal to or more than 0.8 mm, or preferably in particular equal to or more than 1.0 mm. By doing this, a strength of the rib 45 is enhanced, and therefore it is possible to further suitably reinforce the second wall part 42. Incidentally, the second spacer 40B made of resin shrinks by a certain amount at a molding time. Therefore, if the rib 45 is made to be too much thick, there is a fear that the second wall part 42 is pulled by the shrink of the rib 45 so as to be deformed. From a perspective described above, an upper limit of the thickness of the rib 45 is preferably equal to or less than 2.0 mm, further preferably equal to or less than 1.5 mm, or preferably in particular equal to or less than 1.2 mm.

Further, a height of the rib 45 at a portion where it comes into contact with the second wall part 42 is preferably equal to or more than 30% (further suitably equal to or more than 50%, furthermore suitably equal to or more than 75%, or suitably in particular equal to or more than 90%) of a height of the second wall part 42. By doing this, it is possible to further surely inhibit the second wall part 42 from being folded and bent to the inward position of the second direction Y. On the other had, the rib 45 protruding to the upward position more than the second wall part 42 does not contribute in enhancing the strength of the second wall part 42. Thus, an upper limit of the height of the rib 45 with respect to the height of the second wall part 42 is preferably equal to or less than 100%.

Incidentally, as shown in FIG. 4 and FIG. 6, the second spacer 40B of the present embodiment includes plural ribs 45. By doing this, it is possible to further suitably reinforce the second wall part 42. Then, these plural ribs 45 are provided at each of the pair of partition parts 43 opposed to each other across the pass through space 49. In particular, the first partition part 43a is provided with a first rib 45a and a second rib 45b. In addition, the second partition part 43b is provided with a third rib 45c. By doing this, it is possible to suppress the deformation of each front second wall part 42F divided by the pass through space 49. Furthermore, a part of the plural ribs 45 is configured to extend so as to bridge the pair of second wall parts 42 at a position adjacent to the pass through space 49. In particular, the second rib 45b and the third rib 45c are configured to respectively extend from the end parts 42Fa, 42Fb at the pass through space 49 side of the front second wall part 42F toward the rear second wall part 42R. By doing this, it is possible to further suitably suppress the deformations of the end part 42Fa, 42Fb of the front second wall part 42F positioning adjacent to the pass through space 49.

In addition, the first spacer 40A of the present embodiment includes the connecting part 48 that is configured to bridge the partition parts 43 (the first partition part 43a and the second partition part 43b) opposed to each other across the pass through space 49. This connecting part 48 is a rod-shaped member that is configured to extend along the second wall part 42 in the third direction Z. An end part 48a of this connecting part 48 at one Z1 in the third direction Z is connected to the first partition part 43a. In addition, an end part 48b of the connecting part 48 at the other one Z2 in the third direction Z is connected to the second partition part 43b. Then, the connecting part 48 is configured to extend along the opposed direction (the first direction X) of the pair of first side surfaces 14a, 14b so as to be adjacent to the rear second wall part 42R. By making the connecting part 48 be along the rear second wall part 42R as described above, it is possible to reinforce the rear second wall part 42R. Furthermore, the second rib 45b is configured to be adjacent to the end part 48a at one Z1 of the connecting part 48. In addition, the third rib 45c is configured to be adjacent to the end part 48b at the other one Z2 of the connecting part 48. By doing this, it is possible to suppress the deformation in which the end parts 48a, 48b of the connecting part 48 work as the starting points.

Above, the second spacer 40B in the present embodiment has been explained. Incidentally, as shown by FIG. 3, in the secondary battery 1 according to the present embodiment, the spacer 40 (the first spacer 40A) is arranged at one X1 (the upward position at the injection time) of the first direction X, too. Regarding this first spacer 40A, the weight of the electrode body 30 is not added, and thus it is not required to apply the structure in consideration of the deformation at the liquid injection step. Thus, an explanation of the detailed structure relating to the first spacer 40A is omitted.

### <Another embodiment>

Above, the first embodiment of the herein disclosed technique has been explained. Incidentally, the herein disclosed secondary battery is not restricted to the above described first embodiment. In particular, it is enough for the herein disclosed secondary battery that the second spacer is configured to make the load bearing capacity of the second wall part be lower than the load bearing capacity of the first wall part and the rib is formed to reinforce this second wall part. The other configurations are not restricted to the above described first embodiment. Below, another embodiment of the herein disclosed technique will be described.

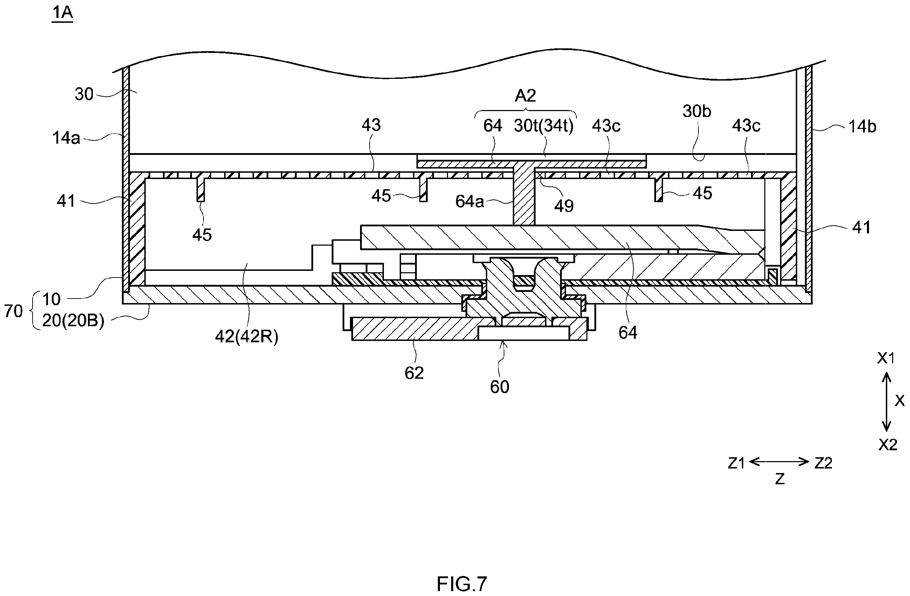

For example, the pass through space 49 of the spacer 40 of the first embodiment is the notch that is formed on the partition part 43. However, it is enough for the spacer to include a space configured to make the inside electrically conductive member (the inside terminal or the electrode tab) pass through, and thus it is not restricted to the notch-shaped pass through space as shown in the first embodiment. For example, in a secondary battery 1A shown by FIG. 7, the negative electrode inside terminal 64 is used that includes a thin rod shape part 64a configured to extend along the first direction X. In a situation where the configuration described above is used, a microscopic opening part, into which the rod shape part 64a of the negative electrode inside terminal 64 can be inserted, might be formed as the pass through space 49. In a situation where the configuration described above is used, the negative electrode inside terminal 64 and the electrode tab 30t are connected at an upward position more than the second spacer 40B. Incidentally, in the secondary battery 1A including the configuration shown by FIG. 7, the second wall part 42 is not divided by the pass through space 49. Even in this situation, if the second wall part 42 is made to be longer or the second wall part 42 is made to be thicker, the load bearing capacity of the second wall part is reduced. By doing this, even if the second wall part is not divided by the pass through space 49, the second wall part 42 becomes the starting point of the deformation. Then, if this second wall part 42 is bridged by the rib 45, it is possible to suppress the deformation of the second spacer 40B.

In addition, as shown by FIG. 6, the second spacer 40B of the first embodiment is configured to make the second wall part 42 become longer than the first wall part 41. However, if it is possible to make the second wall part 42 be as the starting point of the deformation, an outer shape of the second spacer is not particularly restricted. For example, the second spacer might be a spacer whose lengths of the first wall part and the second wall part are approximately the same. Even in a situation where the configuration described above is used, if the second wall part is divided or the second wall part is made to be thinner, the load bearing capacity of the second wall part is reduced. Then, if this second wall part is bridged by the rib, it is possible to suppress the deformation of the second spacer.

Furthermore, the second spacer 40B in the first embodiment is configured to make the second wall part 42 be thinner than the first wall part 41. However, if it is possible to make the second wall part 42 be the starting point of the deformation, a thickness of each wall part is not particularly restricted. For example, it is good that thicknesses of the first wall part and the second wall part are approximately the same. Even in a situation where the configuration described above is used, if the second wall part is divided or the second wall part is made to be longer, the load bearing capacity of the second wall part is reduced. Then, if this second wall part is bridged by the rib, it is possible to suppress the deformation of the second spacer.

In addition, on the second spacer 40B of the first embodiment, the connecting part 48 is formed that is configured to bridge the first partition part 43a and the second partition part 43b. However, the connecting part is not an essential element of the herein disclosed secondary battery. For example, as shown by FIG. 7, in a situation where the pass through space 49 is a microscopic opening part, the partition part 43 is not divided, and therefore it is not required to form the connecting part 48 as shown by FIG. 6. In addition, it is good that the second spacer includes no connecting part and then the first partition part and the second partition part are completely divided. In a situation where the configuration described above is used, it is good that the rib configured to support the second wall part is formed on each of the divided spacers. By doing this, it is possible to suppress the deformation of the second wall part.

Above, detailed descriptions for a specific example of the herein disclosed technique have been given, but these are merely illustrations, and thus are not to restrict the scope of claims. The technique recited in claims contains matters in which the above-illustrated specific example is variously deformed or changed.

Incidentally, the technique disclosed herein includes below described Items 1 to 8. The below described Items 1 to 8 are not restricted to the above described embodiment.

### <Item 1>

A nonaqueous electrolytic solution secondary battery, comprising:
a case main body having a square cylindrical shape with a pair of openings at both ends;
a pair of sealing plates covering the pair of openings so as to construct a battery case;
an electrode body accommodated at an inside of the battery case; and
an electrolytic solution accommodated at the inside of the battery case, wherein
the case main body comprises:
   a pair of first side surfaces having a rectangular plate shape opposed mutually; and
   a pair of second side surfaces having a rectangular plate shape opposed mutually, and respectively extending from an edge of one of the first side surfaces to an edge of the other one of the first side surfaces,
the pair of sealing plates comprise:
   a first sealing plate comprising a liquid injection hole for injecting the electrolytic solution to the inside of the battery case; and
   a second sealing plate arranged at a downward position in a gravity direction at an injection time of the electrolytic solution, wherein
   a spacer supporting the electrode body from the downward position at the injection time of the electrolytic solution is arranged in a space between the second sealing plate and the electrode body,
the spacer comprises:
   a pair of first wall parts respectively extending along at least a part of the pair of first side surfaces of the case main body;
   a pair of second wall parts respectively extending along at least a part of the pair of second side surfaces of the case main body; and
   a partition part being a plate-shaped member extending along an opposed direction of the pair of first side surfaces, and arranged between the electrode body and the sealing plate, and supported by the first wall parts and the second wall parts,
the spacer is configured to make a load bearing capacity of the second wall part be lower than a load bearing capacity of the first wall part, and comprises a rib configured to bridge the pair of second wall parts.

### <Item 2>

The nonaqueous electrolytic solution secondary battery recited in Item 1, wherein a thickness of the second wall part is thinner than a thickness of the first wall part.

### <Item 3>

The nonaqueous electrolytic solution secondary battery recited in Item 1 or 2, wherein
a length of the second wall part is longer than a length of the first wall part.

### <Item 4>

The nonaqueous electrolytic solution secondary battery recited in any one of Items 1 to 3,
further comprising an inside electrically conductive member that is an electrically conductive pathway from the electrode body inside the battery case to an outside terminal outside the battery case, wherein
the spacer having a pass through space for passing the inside electrically conductive member, and
one of the pair of second wall parts is divided by the pass through space.

### <Item 5>

The nonaqueous electrolytic solution secondary battery recited in Item 4, wherein
the pass through space is a notch that is provided in the partition part and at one of the pair of second wall parts.

### <Item 6>

The nonaqueous electrolytic solution secondary battery recited in Item 4 or 5, wherein
the spacer comprises a connecting part connecting a pair of the partition parts opposed to each other across the pass through space, and
the connecting part extends along the opposed direction of the pair of first side surfaces so as to be adjacent to the second wall part.

### <Item 7>

The nonaqueous electrolytic solution secondary battery recited in any one of Items 4 to 6, wherein
the rib is provided on each of a pair of the partition parts opposed to each other across the pass through space.

### <Item 8>

The nonaqueous electrolytic solution secondary battery 1 recited in Item 7, wherein
the rib extends so as to bridge the pair of second wall parts at a position adjacent to the pass through space.

## Claims

1. A nonaqueous electrolytic solution secondary battery (1), comprising:
a case main body (10) having a square cylindrical shape with a pair of openings (12) at both ends;
a pair of sealing plates (20) covering the pair of openings (12) so as to construct a battery case (70);
an electrode body (30) accommodated at an inside of the battery case (70); and
an electrolytic solution accommodated at the inside of the battery case (70), wherein
the case main body (10) comprises:
a pair of first side surfaces (14a, 14b) having a rectangular plate shape opposed mutually; and
a pair of second side surfaces (16a, 16b) having a rectangular plate shape opposed mutually, and respectively extending from an edge of one of the first side surfaces (14a, 14b) to an edge of the other one of the first side surfaces (14a, 14b),
the pair of sealing plates (20) comprise:
a first sealing plate (20A) comprising a liquid injection hole (22) for injecting the electrolytic solution to the inside of the battery case (70); and
a second sealing plate (20B) arranged at a downward position in a gravity direction at an injection time of the electrolytic solution, wherein
a spacer (40) supporting the electrode body (30) from the downward position at the injection time of the electrolytic solution is arranged in a space between the second sealing plate (20B) and the electrode body (30),
the spacer (40) comprises:
a pair of first wall parts (41) respectively extending along at least a part of the pair of first side surfaces (14a, 14b) of the case main body (10);
a pair of second wall parts (42) respectively extending along at least a part of the pair of second side surfaces (16a, 16b) of the case main body (10); and
a partition part (43) being a plate-shaped member extending along an opposed direction of the pair of first side surfaces (14a, 14b), and arranged between the electrode body (30) and the sealing plate (20), and supported by the first wall parts (41) and the second wall parts (42),
the spacer (40) is configured to make a load bearing capacity of the second wall part (42) be lower than a load bearing capacity of the first wall part (41), and comprises a rib (45) configured to bridge the pair of second wall parts (42).

2. The nonaqueous electrolytic solution secondary battery (1) according to claim 1, wherein
a thickness of the second wall part (42) is thinner than a thickness of the first wall part (41).

3. The nonaqueous electrolytic solution secondary battery (1) according to claim 1 or 2, wherein
a length of the second wall part (42) is longer than a length of the first wall part (41).

4. The nonaqueous electrolytic solution secondary battery (1) according to any one of claims 1 to 3,
further comprising an inside electrically conductive member (A1) that is an electrically conductive pathway from the electrode body inside the battery case (70) to an outside terminal outside the battery case (70), wherein
the spacer (40) having a pass through space (49) for passing the inside electrically conductive member (A1), and
one of the pair of second wall parts (42) is divided by the pass through space (49).

5. The nonaqueous electrolytic solution secondary battery (1) according to claim 4, wherein
the pass through space (49) is a notch that is provided in the partition part (43) and at one of the pair of second wall parts (42).

6. The nonaqueous electrolytic solution secondary battery (1) according to claim 4 or 5, wherein
the spacer (40) comprises a connecting part (48) connecting a pair of the partition parts (43) opposed to each other across the pass through space (49), and
the connecting part (48) extends along the opposed direction of the pair of first side surfaces (14a, 14b) so as to be adjacent to the second wall part (42).

7. The nonaqueous electrolytic solution secondary battery (1) according to any one of claims 4 to 6, wherein
the rib (45) is provided on each of a pair of the partition parts (43) opposed to each other across the pass through space (49).

8. The nonaqueous electrolytic solution secondary battery (1) according to claim 7, wherein
the rib (45) extends so as to bridge the pair of second wall parts (42) at a position adjacent to the pass through space (49).
